**Europäisches Patentamt**

**European Patent Office**

**Office européen des brevets**

(19)

(11) Veröffentlichungsnummer : **0 069 160**
**B1**

# (12) EUROPÄISCHE PATENTSCHRIFT

(45) Veröffentlichungstag der Patentschrift :
**09.10.85**

(51) Int. Cl.⁴ : **A 01 D 43/10**

(21) Anmeldenummer : **81105212.5**

(22) Anmeldetag : **04.07.81**

(54) **Vorrichtung zum Mähen und Aufbereiten von Erntegut.**

(43) Veröffentlichungstag der Anmeldung :
**12.01.83 Patentblatt 83/02**

(45) Bekanntmachung des Hinweises auf die Patenterteilung : **09.10.85 Patentblatt 85/41**

(84) Benannte Vertragsstaaten :
**AT CH DE FR GB IT LI NL**

(56) Entgegenhaltungen :
**FR-A- 2 452 237**
**US-A- 4 077 192**
**"Kreiselmäher + Contitioner KM 22 CR, KM 24 CR"**
**KLÖCKNER-HUMBOLDT-DEUTZ AG, Prospekt**
**Impressum 5440 a/806, 8 Seiten**

(73) Patentinhaber : **Klöckner-Humboldt-Deutz AG Zweigniederlassung Fahr**

**D-7702 Gottmadingen (DE)**

(72) Erfinder : **Glunk, Josef**
**Schienerbergstrasse 11**
**D-7702 Gottmadingen (DE)**

**Beschreibung**

Die Erfindung bezieht sich auf eine Vorrichtung zum Mähen und Aufbereiten von Erntegut mit den Merkmalen nach dem Oberbegriff des Patentanspruchs 1.

Es ist bekannt, daß sich die Trocknungsdauer von gemähtem Grüngut durch sogenanntes « Aufbereiten » (Conditionieren) erheblich verringern läßt. Dies ist in erster Linie darauf zurückzuführen, daß während des Aufbereitungsvorgangs die verdunstungshemmende Wachsschicht der Pflanzenteile « aufgeschlossen », d. h. verletzt wird. Die im Erntegut enthaltene Feuchtigkeit kann somit schneller verdunsten.

Zum Aufbereiten von gemähtem Erntegut sind Aufbereiter der unterschiedlichsten bauart bekannt. Diese Aufbereiter sind den Mähwerken, die ebenfalls nach unterschiedlichen Prinzipien arbeiten können, in der Regel direkt nachgeschaltet. Es ist jedoch auch möglich, das Mähen und Aufbereiten in getrennten Arbeitsgängen auszuführen.

Die Aufbereiter nach dem Stand der Technik bestehen in ihrer überwiegenden Anzahl aus einer drehantreibbar gelagerten Welle, an deren Umfang eine Vielzahl von Aufbereitungswerkzeugen elastisch nachgiebig oder starr befestigt ist. In ihrer einfachsten Form bestehen die Aufbereitungswerkzeuge aus radial zur Drehachse des Aufbereiters gerichteten Schlegeln. Insbesondere haben sich V-förmig gestaltete Aufbereitungswerkzeuge in der Praxis besonders bewährt. Eine Vorrichtung zum Mähen und Aufbereiten von Erntegut der in Rede stehenden Bauart ist beispielsweise durch den Prospekt Impressum 54 40 a/806 « Kreiselmäher und Konditioner KM 22 CR, KM 24 CR » der Firma Klöckner-Humboldt-Deutz AG, Zweigniederlassung Fahr, bekannt geworden.

Die bekannten Aufbereiter sind jedoch insofern mit Nachteilen behaftet, da ihre Aufbereitungswirkung nicht der unterschiedlichen Beschaffenheit von Erntegütern angepaßt werden kann. So erfolgt beispielsweise die Aufbereitung von kurzem, langem und/oder auch von unterschiedlichen Erntegutsorten mit der gleichen Intensität. Dies bedeutet beispielsweise, daß normales Weidegras ohne Verluste verarbeitet werden kann, während die Einwirkung auf empfindliches Gut wie z. B. Luzerne zu intensiv ist.

Die der Erfindung zugrunde liegende Aufgabe besteht darin, mit baulich einfachen Mitteln einen Aufbereiter zu schaffen, der bei möglichst gleicher Wirkung sowohl für die Bearbeitung von empfindlichem und weniger empfindlichem Erntegut einsetzbar ist.

Mit den im kennzeichnenden Teil des Hauptanspruchs angegebenen Maßnahmen wird erreicht, daß die — gesehen in Durchflußrichtung des Erntegutes — einander gegenüberliegenden Seiten der Aufbereitungswerkzeuge wahlweise, je nach Beschaffenheit des Erntegutes, zur Bearbeitung des Gutes eingesetzt werden können. Um eine Intensitätsänderung zu erzielen, wird vorgeschlagen, entweder die eine oder die andere Seite der Aufbereitungswerkzeuge mit dem Erntegut in Eingriff zu bringen, wobei die jeweilig vorliegenden Eingriffsverhältnisse in Bezug auf das Erntegut voneinander abweichend gestaltet sind. Um den baulichen Aufwand gering zu halten, d. h. insbesondere, um keine besondere Leistungsverzweigung — u. U. mit Drehrichtungsumkehr — im Antriebssystem des Aufbereiters vornehmen zu müssen, wird ferner vorgeschlagen, den Aufbereiter mit einem zusätzlichen Antriebselement zu versehen und so zu lagern, daß er, bezogen auf seine Längsachse, um jeweils 180° versetzt eingesetzt werden kann. Auf diese Weise kann in Abhängigkeit der Beschaffenheit des Erntegutes die eine oder andere Seite der Aufbereitungswekzeuge auf das Erntegut einwirken.

Den Unteransprüchen 2 bis 7 sind besonders vorteilhafte bauliche Ausgestaltungen des Aufbereiters hinsichtlich seiner Antriebselemente und der Gestaltung der Aufbereitungswerkzeuge zu entnehmen.

Weitere, für die Erfindung wesentliche Merkmale sowie die daraus resultierenden Vorteile sind der nachfolgenden Beschreibung eines Ausführungsbeispiels der Erfindung anhand der Zeichnungen zu entnehmen.

Es zeigen :

Figur 1 eine Vorrichtung zum Mähen und Aufbereiten von Erntegut in schematischer Darstellung in Draufsicht ;

Figur 2 einen Teil der Vorrichtung nach Fig. 1, gesehen in Rückansicht ;

Figur 3 ein Teil der Vorrichtung nach den Fig. 1 und 2, gesehen in Seitenansicht ;

Figuren 4 + 5 eine schematische Darstellung der voneinander abweichenden Eingriffsverhältnisse bei der Bearbeitung von unterschiedlichem Erntegut.

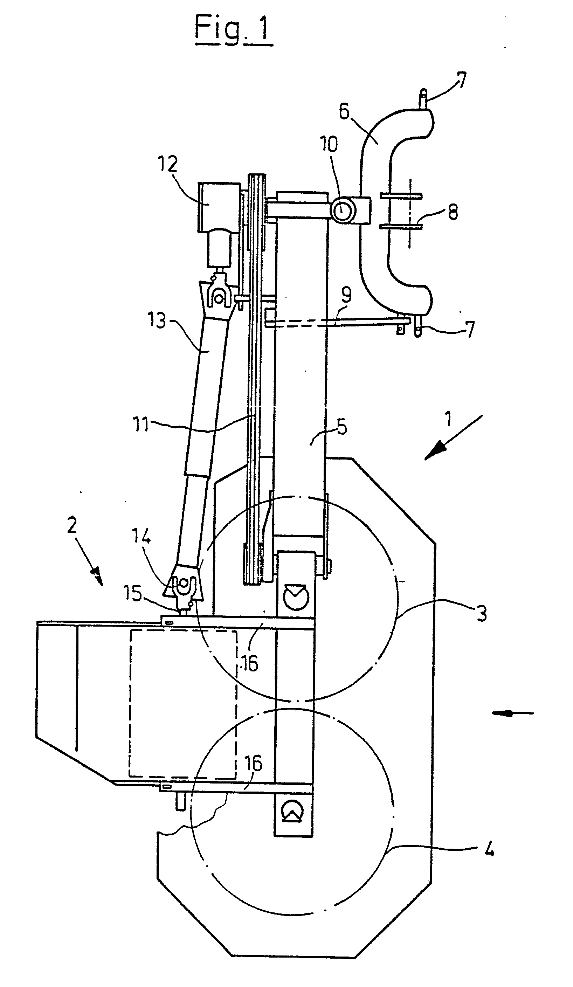

In Fig. 1 ist eine Vorrichtung zum Mähen und Aufbereiten von Erntegut schematisch in Draufsicht wiedergegeben. Sie besteht aus einem Mähwerk 1 und einem angebauten Aufbereiter 2. Das Mähwerk 1 verfügt über zwei trommelförmige Schneidwerkskörper 3 und 4, die schematisch angedeutet sind. Anstelle eines Kreiselmähwerks kann ein Mähwerk abweichender Bauart, z. B. ein Scheibenmähwerk eingesetzt werden.

Das Mähwerk 1 ist über einen Tragarm 5 mit einem Anschlußrahmen 6 verbunden. Der Anschlußrahmen 6 verbunden. Der Anschlußrahmen 6 kann an ein nicht dargestelltes Dreipunktgestänge eines Schleppers oder dergl. angeschlossen werden. Hierzu sind untere Anschlußstellen 7 und eine obere Anschlußstelle 8 vorgesehen. Der Tragarm 5 kann, zusammen mit dem Mähwerk 1, nach Lösen einer Verriegelungseinrichtung 9 um eine vertikal stehende Achse 10 um 90° nach rückwärts verschwenkt werden. Diese Stellung entspricht der Transportstellung. Der Antrieb des Mähwerks erfolgt in bekannter Weise über eine nicht gezeigte Gelenkwelle vom Schlepper aus über einen Riementrieb 11. Anstelle des Riementriebs 11 kann auch eine Gelenkwelle eingesetzt werden.

Der Antrieb des Aufbereiters 2 erfolgt von einem Winkelgetriebe 12 ausgehend mit Hilfe einer Gelenkwelle 13, deren Abtriebsgelenk 14 mit einem Antriebselement 15 des Aufbereiters 2 in Verbindung steht. Das Antriebselement 15 ist im dargestellten Ausführungsbeispiel als mit einem Keilwellenprofil versehene Antriebswellenstummel ausgebildet.

Der Aufbereiter 2 ist innerhalb von seitlichen Wandungen 16 leicht lösbar gelagert.

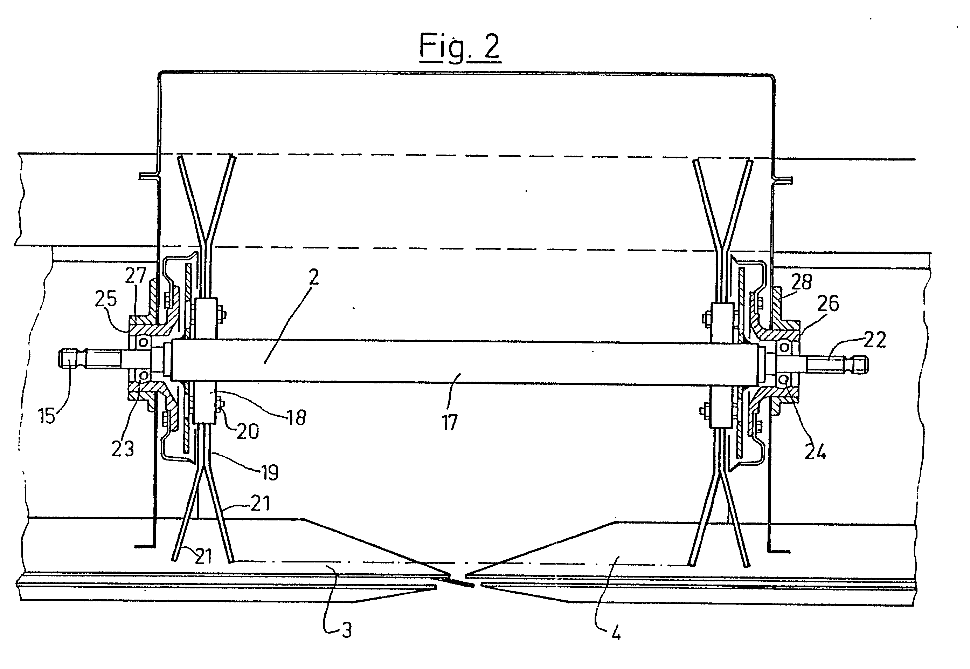

Der konstruktive Aufbau des Aufbereiters 2 geht insbesondere aus Fig. 2 hervor. Das Antriebselement 15 ist Bestandteil einer Welle 17, die auf ihrem Mantel eine Vielzahl von Lagern 18 aufweist. In diesen Lagern 18 sind jeweils die Aufbereitungswerkzeuge 19 mit Hilfe von Befestigungsmitteln 20 gehaltert.

Jedes Aufbereitungswerkzeug 19 wird aus zwei Zinken 21 gebildet, deren freie Enden V-förmig gerichtet verlaufen.

Anstelle der dargestellten Zinken 21 können die Aufbereitungswerkzeuge 19 auch durch pendelnd gelagerte Schlegel gebildet sein.

Das von den Schneidkörpern 3 und 4 gemähte und nach hinten abgeführte Erntegut wird durch die Aufbereitungswerkzeuge 19 des Aufbereiters 2 erfaßt, « über Kopf » gefördert und in Form eines Schwades auf dem Boden abgelegt. Bei diesem Vorgang wird das Erntegut zur Beschleunigung des Trocknungsablaufs besonders aufbereitet.

An der dem Antriebselement 15 gegenüberliegenden Seite des Aufbereiters 2 ist ein zusätzliches Antriebselement 22 vorgesehen. Zweckmäßigerweise sind die Antriebselemente 15 und 22 identisch ausgestaltet.

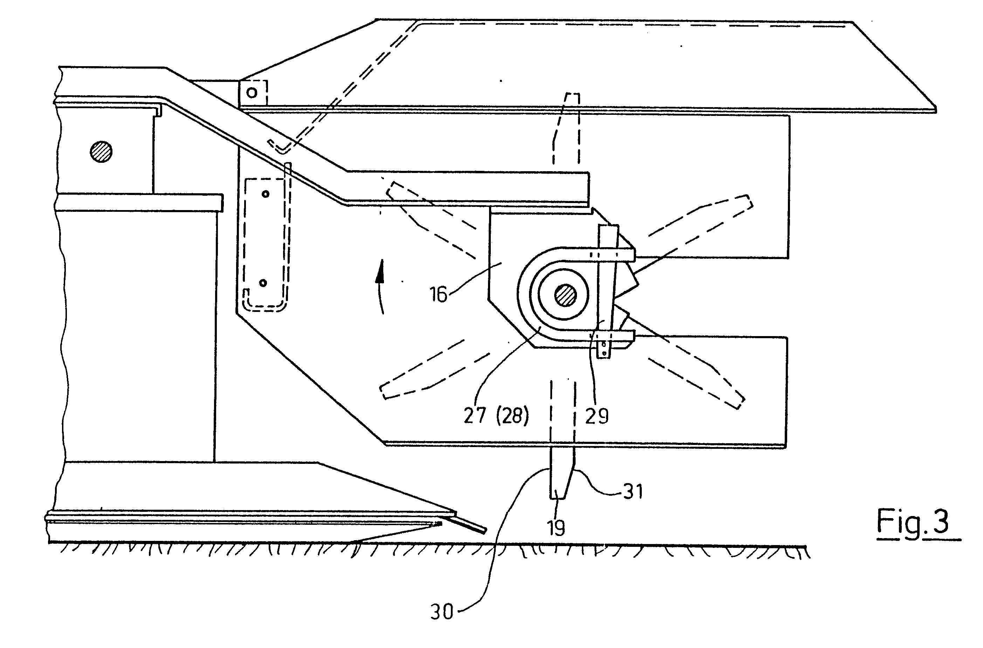

Die Welle 17 ist über Kugellager 23 und 24 in Lagerflanschen 25 und 26 drehbar gelagert. Die Lagerflansche 25 und 26 sind ihrerseits in U-förmigen Fangtaschen 27 und 28 (vergl. Fig. 3) festgelegt. Die Fangtaschen 27 und 28 sind zu einer Seite hin geöffnet und durch je einen lösbaren Steckbolzen 29 verschlossen.

Die erläuterte bauliche Ausgestaltung des Aufbereiters 2 erlaubt es, daß dieser innerhalb kürzester Zeit — nach Lösen der Gelenkwelle 13 vom Antriebselement 15 — ausgebaut und in einer, bezüglich seiner Längsachse um 180° versetzten Lage wieder eingebaut werden kann. Betrachtet man eines der Aufbereitungswerkzeuge 19, beispielsweise das in Fig. 3 nach unten weisende, hat das um 180° versetzte Anordnen des Aufbereiters zur Folge, daß entweder die eine Seite 30 oder die andere Seite 31 in Eingriff mit dem zu fördernden Erntegut gelangt. Um die gewünschte Veränderung der Bearbeitungsintensität zu erreichen, müssen demnach lediglich unterschiedliche Eingriffsverhältnisse zum Erntegut vorliegen, jenachdem, welche der Seiten 30 und 31 eingesetzt wird. Am leichtesten lassen sich die Eingriffsverhältnisse durch eine unterschiedliche Formgebung der Seiten 30 und 31 beeinflussen. Im in Fig. 3 dargestellten Beispiel verläuft die Seite 30 eines der Aufbereitungswerkzeuge geradlinig, während die Seite 31 mit einer Abschrägung versehen ist.

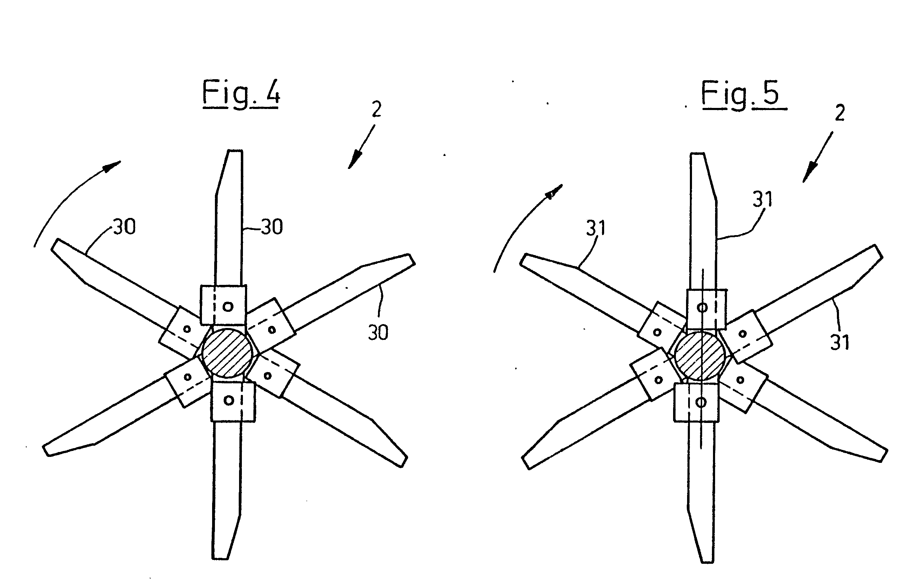

Bei der in Fig. 4 schematisch wiedergegebenen Einbaulage des Aufbereiters 2 gelangen die geradlinig verlaufenden Seiten 30 der Aufbereitungswerkzeuge 19 mit dem Erntegut in Eingriff. Die Bearbeitung erfolgt hierbei relativ intensiv, sodaß in dieser Betriebslage des Aufbereiters 2 weniger empfindliches Erntegut bearbeitet werden kann.

Nach Umsetzen des Aufbereiters 2 in eine um 180° versetzte Lage wird die in Fig. 5 dargestellte einbaulage erreicht. Nunmehr stehen die Seiten 31 mit ihren abgeschrägten Enden mit dem Erntegut in Eingriff. Durch die abweichende Formgebung wird insbesondere erreicht, daß sich das mitgeführte Erntegut früher von den Aufbereitungswerkzeugen 19 löst, sodaß dessen Bearbeitung, verglichen mit derjenigen nach Fig. 4, weniger intensiv erfolgt. Diese Lage des Rotors 2 ist daher vorzugsweise für die Bearbeitung von empfindlichem Erntegut zu wählen.

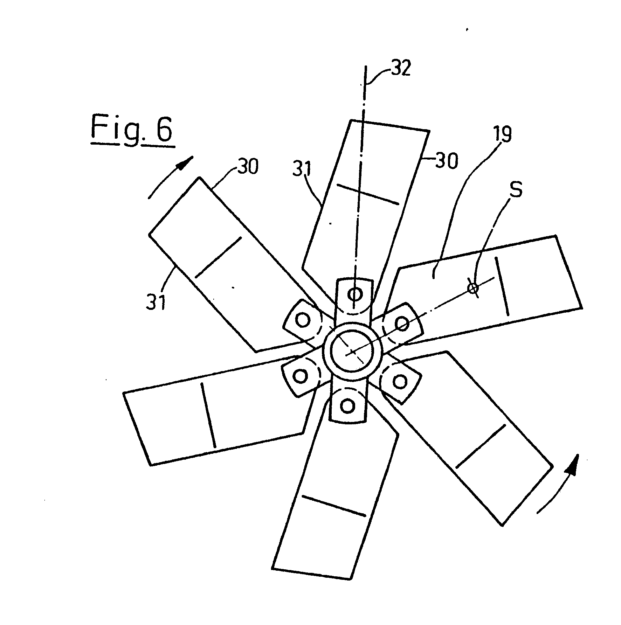

Der in Fig. 6 schematisch in Seitenansicht wiedergegebene Aufbereiter 2 ist mit einer Vielzahl von Aufbereitungswerkzeugen 19 in Form von frei pendelnd aufgehängten Schlegen bestückt. Die Aufbereitungswerkzeuge 19 nehmen, gesehen in Seitenansicht, etwa die Form eines flachgestreckten Rechtecks ein. Die Befestigungsstelle jedes Aufbereitungswerkzeuges erfolgt außermittig. Je nach Schwerpunktslage lassen sich mit dieser Anordnung die Eingriffsverhältnisse der Seiten 30 und 31 in Bezug auf das Erntegut verändern. Im dargestellten Ausführungsbeispiel läuft die Seite 30 gegenüber einer durch die Befestigungsstelle führenden Radialen 32 relativ weit voraus, während die Seite 31 ihr gegenüber eher « nacheilt ». Auch auf diese Weise läßt sich die Bearbeitungsintensität variieren, jenachdem welche der Seiten 30 und 31 mit dem Erntegut im Eingriff steht.

**Patentansprüche**

1. Vorrichtung zum Mähen und Aufbereiten von Erntegut, bestehend aus einem Mähwerk (1) und einem diesem nachgeschalteten, lösbar in seitlichen Wandungen (16) eines Maschinenrahmens drehantreibbar gelagerten Aufbereiter (2), der auf einer Welle (17) eine Vielzahl etwa radial gerichteter Aufbereitungswerkzeuge (19) wie Zinken, Schlegel oder dergl. sowie ein an einem Ende der Welle (17) angreifendes Antriebselement (15) aufweist, dadurch gekennzeichnet, daß auf der dem Antriebselement (15) gegenüberliegenden Seite des Aufbereiters (2) ein zusätzliches Antriebselement (22) vorgesehen ist, welches nach Umsetzen des Aufbereiters (2) in eine um 180° versetzte Lage — bezogen auf seine Längsachse — dem Antrieb des Aufbereiters (2) dient und daß der Umriß der Aufberei-

tungswerkzeuge (19) — gesehen in Seitenansicht der Vorrichtung und bezogen auf ihre Längsachse bzw. auf eine durch ihre jeweiligen Befestigungsstellen (18) führende Radiale (32) — assymmetrisch gestaltet ist.

2. Vorrichtung nach Anspruch 1, dadurch gekennzeichnet, daß die Antriebselemente (15, 22) zu beiden Seiten des Aufbereiters (2) aus baulich übereinstimmenden Antriebswellenstummel gebildet sind.

3. Vorrichtung, bei der der Antrieb des Aufbereiters (2) über eine Gelenkwelle (13) erfolgt, nach Anspruch 2, dadurch gekennzeichnet, daß die Gelenkwelle (13) wahlweise mit einem der Antriebswellenstummel (15, 22) verbindbar ist, wobei diese mit gleichen Keilwellenprofilen versehen sind.

4. Vorrichtung, bei der der Antrieb des Aufbereiters (2) über ein Antriebsrad und eine Kette, Riemen oder dergleichen erfolgt, nach Anspruch 2, dadurch gekennzeichnet, daß das Antriebsrad wahlweise mit einem der Antriebswellenstummel (15, 22) verbindbar ist.

5. Vorrichtung, bei der der Aufbereiter (2) mit feststehenden, gegebenenfalls elastisch nachgiebig gelagerten Zinken (21) bestückt ist, nach Anspruch 1, dadurch gekennzeichnet, daß die Zinken (21) — gesehen in Seitenansicht — einseitig abgeschrägt sind.

6. Vorrichtung, bei der der Aufbereiter (2) mit pendelnd nachgiebig gelagerten Schlegeln bestückt ist, nach Anspruch 1, dadurch gekennzeichnet, daß — gesehen in Seitenansicht — jeder Schlegel etwa die Form eines flach gestreckten Rechtecks aufweist und daß die Befestigungsstelle des Schlegels im Bereich einer der Eckpunkte des Rechtecks liegt.

7. Vorrichtung nach Anspruch 1, dadurch gekennzeichnet, daß der Aufbereiter (2) seitlich innerhalb von U-förmigen, mittels Steckverbindungen (2) verschließbarer Fangtaschen (27, 28) drehbar gehalten ist.

## Claims

1. Apparatus for mowing and processing harvest material, comprising a mowing device (1) and a processing means (2), which is connected downstream of said mowing device, said processing means being detachably mounted in a rotatably drivable manner in lateral walls (16) of a machine frame and having, on a shaft (17), a plurality of substantially radially extending processing tools (19) such as tines, flails or the like, and a drivable member (15) engaged on one end of the shaft (17), characterised in that an additional drivable member (22) is provided on the side of the processing means (2) opposite the drivable member (15) and serves to drive the processing means (2) after the processing means (2) has been moved into a position which is transposed through 180° — relative to its longitudinal axis — and in that the configuration of the processing tools (19) has an asymmetrical form when seen in the side elevational view of the device and relative to its longitudinal axis or, respectively, relative to a radial line (32) extending through each of its respective mounting points (18).

2. Apparatus according to claim 1, characterised in that the drivable members (15, 22) at both ends of the processing means (2) are formed from structurally identical drive shaft stubs.

3. Apparatus, wherein the processing means (2) is driven by a pivotal shaft (13), in accordance with claim 2, characterised in that the pivotal shaft (13) is selectively connectable to one of the drive shaft stubs (15, 22), the latter being provided with identical splined shaft profiles.

4. Apparatus, wherein the processing means (2) is driven by a drive wheel and a chain, belt or the like, in accordance with claim 2, characterised in that the drive wheel is selectively connectable to one of the drive shaft stubs (15, 22).

5. Apparatus, wherein the processing means (2) is provided with fixed tines (21) which are possibly mounted in an elastically resilient manner, in accordance with claim 1, characterised in that the tines (21) — when seen in a side elevational view — are inclined at one side.

6. Apparatus, wherein the processing means (2) is provided with flails which are mounted in an oscillatory and resilient manner, in accordance with claim 1, characterised in that — when seen in a side elevational view — each flail is substantially in the form of an elongated rectangle, and in that the mounting point for the flail lies in the region of one of the corners of the rectangle.

7. Apparatus according to claim 1, characterised in that the processing means (2) is rotatably retained laterally and within the interior of U-shaped accommodating traps (27, 28) which are closeable by means of insert connections (29).

## Revendications

1. Dispositif pour faucher et préparer la récolte, se composant d'une faucheuse (1) et d'un préparateur (2) disposé après elle, qui est logé pouvant être entraîné en rotation, de manière détachable dans les parois latérales (16) d'un bâti, qui présente, sur un arbre (17), un certain nombre d'outils de préparation (19) dirigés à peu près radialement, comme des pointes, des battoirs ou analogues ainsi qu'un élément d'entraînement (15) agissant à une extrémité de l'arbre (17), caractérisé en ce que sur le côté du préparateur (2) situé face à l'élément d'entraînement (15) est prévu un élément supplémentaire d'entraînement (22) qui, après changement du préparateur (2) pour une position décalée de 180°, en se rapportant à son axe longitudinal, sert à l'entraînement du préparateur (2) et en ce que le pourtour des outils de préparation (19) en regardant en vue latérale du dispositif et en se rapportant à l'axe longitudinal ou respectivement à une ligne radiale (32) passant respectivement par chaque point de fixation (18), est de configuration asymétrique.

2. Dispositif selon la revendication 1 caractérisé en ce que les éléments d'entraînement (15, 22) sont formés, des deux côtés du préparateur (2) comme des bouts d'arbre de transmission correspondant par leur construction.

3. Dispositif, par lequel l'entraînement du préparateur (2) se produit au moyen d'un arbre articulé (13), selon la revendication 2, caractérisé en ce que l'arbre articulé (13) peut être relié, au choix, avec l'un des bouts d'arbre de transmission (15, 22), ceux-ci étant pourvus de cannelures identiques.

4. Dispositif, dans lequel l'entraînement du préparateur (2) se produit au moyen d'une roue d'entraînement et d'une chaîne, d'une courroie ou analogue, selon la revendication 2, caractérisé en ce que la roue d'entraînement peut être reliée, au choix, à l'un des bouts d'arbre de transmission (15, 22).

5. Dispositif, dans lequel le préparateur 2 est équipé de pointes 21 fixes et logées le cas échéant de manière élastiquement souple, selon la revendication 1, caractérisé en ce que les pointes (21), en vue latérale, sont en biseau d'un côté.

6. Dispositif, dans lequel le préparateur 2 est équipé de battoirs logés flottants, selon la revendication 1, caractérisé en ce que, en vue latérale, chaque battoir a à peu près la forme d'un rectangle plat et en ce que le point de fixation du battoir se trouve dans la zone d'un coin du rectangle.

7. Dispositif selon la revendication 1 caractérisé en ce que le préparateur (2) est retenu rotatif latéralement à l'intérieur de poches de réception (27, 28) en forme de U, pouvant être fermées au moyen de cavaliers (2).

# Fig. 1

Fig. 2

Fig.3

0 069 160

Fig. 5

Fig. 4

Fig. 6